# EUROPEAN PATENT SPECIFICATION

(11) **EP 0 256 754 B1**
(45) Date of publication and mention of the grant of the patent: **20.01.1993**
(21) Application number: 87306899.3
(22) Date of filing: 04.08.1987
(51) Int. Cl.: B29C 67/22, B29C 47/00, B29C 35/10, B29K 25/00

(54) **Process for producing styrene resin foam**
Verfahren zur Herstellung von Polystyrolschaumstoffen
Procédé pour la production de mousses synthétiques en polystyrène

(30) Priority: 04.08.1986 JP 181872/86
(43) Date of publication of application: 24.02.1988
(73) Proprietor: THE DOW CHEMICAL COMPANY, Midland Michigan 48640-1967 (US)
(72) Inventor: Kadota, Takao, Utsunomiya City Tochigi-Ken 320 (JP); Wakabayashi, Masayuki, Kamitsuga-gun Tochigi-Ken 322 06 (JP)
(74) Representative: Raynor, John

(56) References cited:
- EP-A- 0 051 570
- FR-A- 2 384 611
- GB-A- 1 518 847
- US-A- 3 466 705

## Description

The present invention relates to a process for producing a styrene resin foam. More particularly, the present invention relates to a process for producing a polystyrene resin foam having a low density, a high heat insulation property, and a relatively large thickness, and a section substantially uniform in density and mechanical strength.

### Related Art

Extruded polystyrene resin foams have been widely used as heat insulation material for not only ordinary residences but also other structures, because they can be produced continuously and efficiently and have various advantageous characteristics such as heat insulation property, lightness, low water absorption property, and processability.

Extruded polystyrene resin foams have been produced by mixing and melting a polystyrene resin, a foaming agent and other additives in the cylinder of an extruder, extruding the resulting molten mixture through the extrusion die of the extruder from a high pressure zone to a low pressure zone, and passing the extruded material through a molding device while the extruded material continues foaming. The extruded foams thus obtained, however, have a disadvantage in that the degree of foaming in the section perpendicular to the direction of extrusion is not uniform making the density distribution and mechanical strength distribution of the foams nonuniform. This is because, since the extruded resin mixture has a high temperature, and accordingly, a poor shape retainability, it is molded at a molding device with cooling and the surface portion of the extrudate is cooled faster than the inner portion of the extrudate, and thus the foaming of the surface portion is suppressed. Therefore, the surface portion has high density and the inner portion has a low density. Moreover, the cooling of the extruded resin mixture having a high temperature by the molding device suppresses the overall foaming of the mixture, and accordingly, adversely affects the desired density of the extruded foam.

Therefore, processes have been proposed in which an extruded material is reheated after foaming and cooling, or is continuously sent to a vacuum device or into an atmosphere of a vapor having a large heat capacity and liquid at normal temperatures. Foams produced according to these processes, however, still have a nonuniform density and a nonuniform mechanical strength in the section perpendicular to the direction of extrusion of foam. Therefore, these foams, when used in a form cut from a thick foam, will bend and even break upon slight temperature changes, and accordingly, must be used in the form of a single sheet. This leads to a very poor productivity and high costs.

Japanese Unexamined Patent Publication No. 56-99635 discloses a process wherein a styrene resin foam sheet is "cooled" at the surface during extrusion or just after extrusion, and subsequently or after having been allowed to stand, is heated at the surface to cause foaming thereat. In this process, the resin is cooled at the front end of an orifice during extrusion or just after the resin has passed through the orifice; accordingly, the resin is cooled while still retaining a sufficient foaming ability. As a result, when this once cooled foam (i.e., a foamed heat insulation material) particularly of large thickness is reheated in order to cause foaming, the heating does not reach the innermost portion of the foam, making it difficult to obtain a foam having uniform properties and a low density. When the heating is conducted by using, for example, a vapor having a large heat capacity and a high gas permeability to polystyrene resins, i.e., can easily transmit heat to the innermost layer of a foam, a low density can be achieved but, as the permeation of the vapor progresses, the densities of the surface layer and the innermost layer are reversed causing a nonuniform density distribution. Further, heating by such a vapor requires a certain length of time or a step for eliminating a condensate of the vapor remaining in the foam, leading to higher costs or heat loss. Furthermore, the additional step of heating a once-cooled foam (i.e., a heat insulation material) is wasteful and is very disadvantageous from the standpoint of final product cost.

EP-A-0 051 570 discloses a similar method in which the foam sheet is cooled just after extrusion, and then reheated, resulting in the formation of non-foamed skin layers and thus a non-uniform foam.

Japanese Unexamined Patent Publication No. 59-62122 and Japanese Unexamined Patent Publication No. 58-63426, etc., disclose a process wherein an extrudate is subjected to foam molding in a vacuum zone. In this process, the total size of the apparatus is very large and it is difficult to control the properties of the foam produced and to obtain a product having uniform properties. Moreover, the apparatus must be tightly sealed, but such sealing is difficult. Slight variation of the vacuum of the apparatus due to an incomplete sealing has an influence on the uniformity of the properties of the product. In this case, even if uniform properties have been obtained in the section of a foam, the variation of properties with the lapse of time or between production lots is large.

Japanese Examined Patent Publication No. 42-24071 describes a process wherein a thermoplastic resin foam is extruded under an atmospheric pressure and immediately placed in a vapor of a heat-conductive medium which is a liquid at normal conditions and has a large heat capacity, at a vapor temperature at least equal to the softening point of the resin. In this process also, it is necessary, as mentioned previously, to carefully select a material for the apparatus when steam or a particular vapor is used, and to eliminate the condensate of the vapor remaining in the treated foam by, for example, a drying step, and further, to determine the dimension of the product by taking into consideration the change of the dimension in that step. More important, the properties of the product obtained become nonuniform depending upon the type, temperature, and amount of the vapor used. For example, steam has a gas permeability to polystyrene which is about 4,000 times that of air (N₂), easily penetrates a foam, and can produce a foam product having a low density. Nonetheless, placing the foam in contact with too large an amount of steam gives the foam a too low density, whereby the resulting foam shrinks at normal temperatures and water (condensed steam) is contained within the foam, which water must be removed. Further, the foam has a large reduction in density at the surface layer and, accordingly, has a smaller density at the surface layer than at the innermost layer, thus making the properties of the foam nonuniform.

### The Invention

In view of the above existing drawbacks of the prior art, the present inventor made a study to try to find a way to obtain an extruded polystyrene resin foam having a uniform density distribution in the section. Eventually, the present inventor discovered that a polystyrene resin foam having uniform foaming in the section can be obtained by passing a resin foam just after extrusion through a molding device, omitting the cooling of the foam as in the prior art but maintaining the temperature of the foam or heating the foam to allow the foam to be completely foamed before the foam hardens.

In its broadest aspect, the present process invention is a process for producing an extruded polystyrene resin foam by extruding a melt of a mixture of a polystyrene resin, a foaming agent and optionally other additives from a high pressure zone to a low pressure zone, characterized in that the material is extruded directly into a molding device which is maintained at at a temperature within its range ± 10°C of the softening temperature of the resin temperature while the extruded material is in contact with the molding device.

Also, the invention in another aspect is the product made by the process.

The product is an extruded polystyrene resin foam having a section with a uniform distribution of density and, accordingly, a uniform distribution of mechanical strength, can be produced at a low cost by a simple apparatus. As a result, the product has an improved uniformity in quality, an improved yield, and a lower cost. Further, according to the present invention, an extruded polystyrene resin foam having a lower density can be produced, thus providing a lighter weight and an improved heat insulation efficiency, etc.

### The Drawings

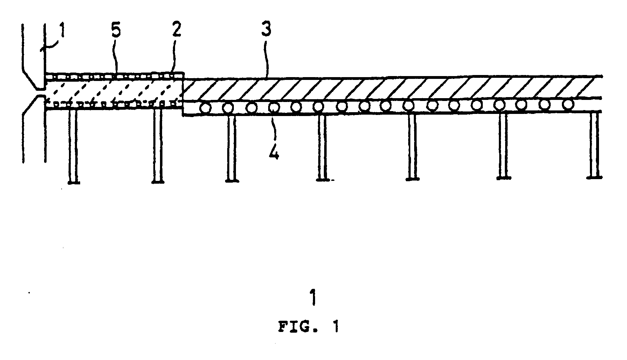

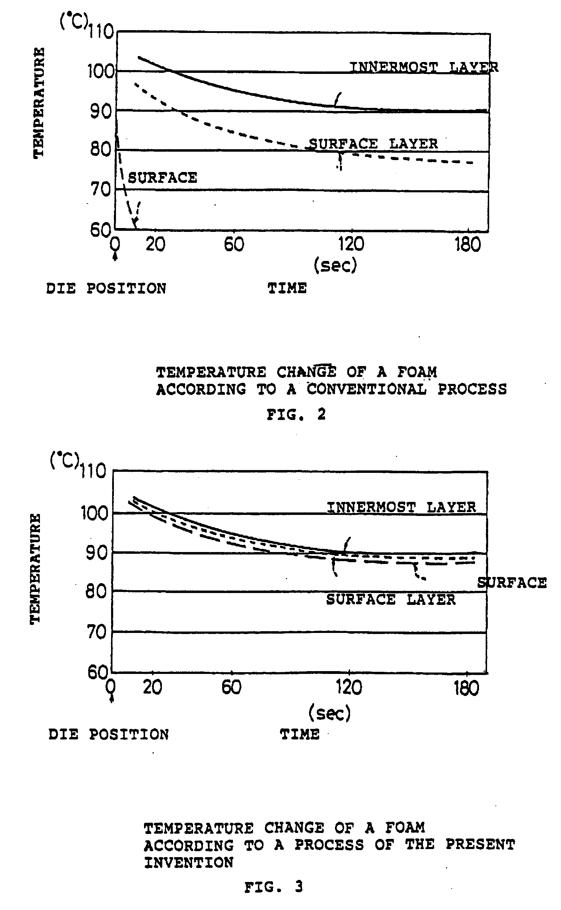

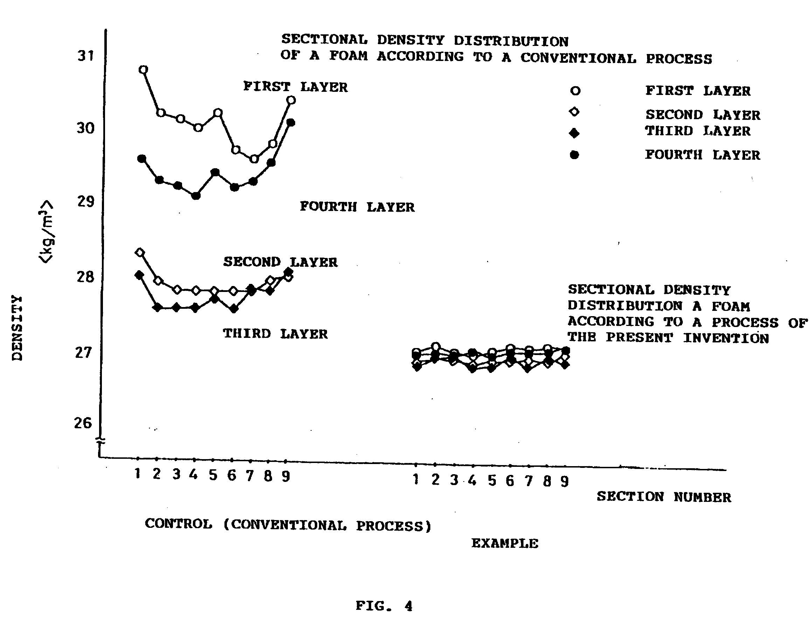

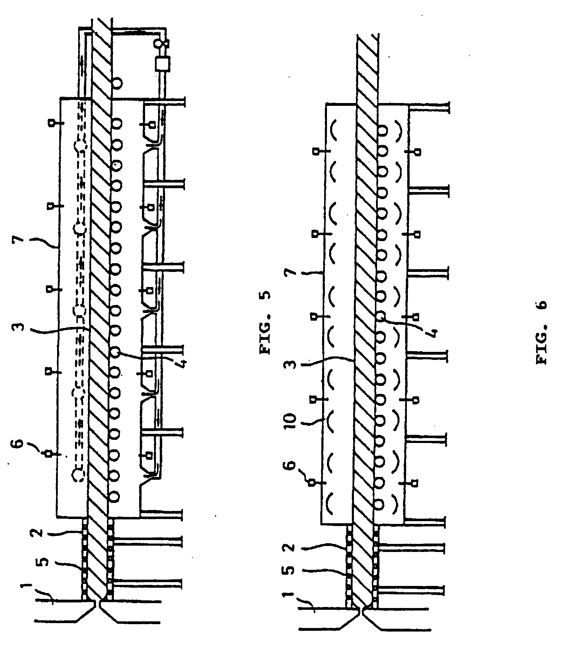

Figure 1 schematically shows an extruding apparatus according to the process of the present invention; Fig. 2 is a graph showing a typical temperature change, after extrusion, of the foam at various points in its cross-section, according to a process of the prior art; Fig. 3 is a graph showing a typical temperature change, after extrusion, of the foam at various points in its cross-section, according to a process of the present invention; Fig. 4 shows the density distributions of the foams produced, according to the processes of the present invention and the prior art; Fig. 5 schematically shows an extruding apparatus according to the present process in which an extruded material is passed through an atmosphere which is heated or the temperature of which is maintained; and Fig. 6 schematically shows an extruding apparatus according to the present process in which an extruded material is irradiated with infrared rays.
- 1: extrusion die,
- 2: molding device,
- 3: extruded material,
- 4: roll conveyer,
- 5: heater,
- 6: temperature, sensor,
- 7: tunnel,
- 8: blower,
- 9: heat exchanger,
- 10: IR irradiator.

In the present invention, the styrene resin refers to, for example, a homopolymer of a styrene derivative (e.g., styrene, alpha-methylstyrene, dichlorostyrene, dimethylstyrene, t-butylstyrene, vinyltoluene), a polymer of at least of two thereof, or a copolymer of the styrene derivative and a small amount of a compound easily copolymerizable with other monomers (e.g. divinylbenzene, methyl methacrylate, acrylonitrile, butadiene). As the foaming agent used in the present invention, there can be mentioned volatile organic foaming agents and thermally decomposable chemical foaming agents. Preferable foaming agents are volatile organic foaming agents having a boiling point (at 1 atm or below) not higher than the softening point of the base resin, such as trichlorofluoromethane, dichlorodifluoromethane, dichlorofluoromethane, chlorodifluoromethane, 1,1ʹ2-trichlorotrifluoroethane, 1,2-dichlorotetrafluoroethane, 1-chlorotrifluoroethane, 1-chloro-1,1ʹ-difluoroethane, 1,1-difluoroethane, octafluorodichlorobutane, methyl chloride, ethyl chloride, methylene chloride, ethylene chloride, propane, butane, butene, propylene, pentane, methanol, carbon dioxide and the like. Further, additives such as a flame retardant, a nucleating agent, an ultraviolet absorber, a lubricant, a resin modifier, and a coloring agent can be added as necessary.

Next, the process according to the present invention is explained with reference to an apparatus shown in Figs. 1 to 3.

Figure 1 shows a typical apparatus for carrying out the process of the present invention. In Fig. 1, 1 is an extrusion die (a nozzle); 2 is a molding device which can be heated; 3 is an extrudate; 4 is a roll conveyer; and 5 is a heater. It should be noted that the mixing of a resin with a foaming agent, etc., and the extrusion thereof, can be the same as employed in the conventional production of a polystyrene resin. The foaming agent is mixed with the resin in an extruder (the main body is not shown) before the resin is supplied to the extruder. The resin mixture containing the foaming agent, etc., is moved forward in the extruder by a screw while being propelled, compressed, melted, and mixed, and is then pushed out from a high pressure zone to a low pressure zone by being passed through the extrusion die (orifice) 1. Subsequently, the extrudate leaving the die 1 is passed through the molding device 2 having sectional dimensions (in vertical and horizontal directions) larger than those of the opening of the extrusion die 1, typically a molding device consisting of only two horizontal parallel plates or a foaming device consisting of two horizontal parallel plates and two vertical parallel plates, to undergo forming and molding.

In the present process, in the molding (sizing) step, the molding device 2 is heated or the temperature thereof is maintained, and thus the extrudate has a uniform temperature distribution in the section until the extrudate hardens. In the conventional molding device which is not heated or the temperature of which is not maintained, the surface layer of the extrudate which is in contact with the molding device or with air is cooled at a faster rate than the innermost portion, thus suppressing the foaming of the surface layer, locally reducing the density of the innermost portion and subjecting the surface layer itself to different cooling rates and, accordingly, producing different densities depending upon the location. These drawbacks of the conventional molding device are solved by the present process. In the present process, the extrudate has a uniform degree of foaming and, accordingly, a uniform density distribution in the section perpendicular to the extrusion direction of the extrudate. Moreover, since the extrudate is heated or the temperature thereof is maintained, the extrudate is maintained in a soft condition or hardening thereof is at least delayed, and during that time, the foaming is able to sufficiently progress; as a result, the foaming of the extrudate in the section thereof perpendicular to the extrusion direction is uniformalized, the foaming is sufficiently progressed without suppression, and the resulting foam has a low density. Further, the uniform and low density of the extruded foam is obtained without once cooling the extrudate and utilizing the heat of melting and extrusion and, accordingly, there is no heat loss. Furthermore, the heating or temperature maintenance of the extrudate is conducted easily and causes no inconvenience, as when using steam or another particular vapor.

The method for heating the molding device or for maintaining the temperature of the molding device is not particularly restricted. However, desirably, the molding device is divided into a plurality of divisions and the temperature of each division is controlled independently, to give the extrudate a uniform temperature distribution in the section of the extrudate. For example, in a molding device consisting of two (upper and lower) horizontal parallel plates, each plate is divided into three divisions in the extrusion direction and into three divisions in the width direction (total 18 division), and the temperatures of these 18 divisions of the plates are controlled independently. In the width direction, in particular, the terminal portions are more affected by the circumferential temperature than the innermost portion and, accordingly, the temperatures of these terminal portions are preferably controlled independently. Further, the area of each division to be subjected to independent temperature control is preferably determined in accordance with the degree of affect by the circumferential temperature. Therefore, it is usual to allow the two terminal portions of the width direction and the front portion of the extrusion direction to a smaller area than the respective intermediate portions. Although preferably the temperature control is made in more divisions than those (18 divisions) mentioned above, the effect of the present invention can be exhibited even when the molding device is heated by a single heater and, accordingly, such heating is within the scope of the present invention. The object of the present invention can be achieved simply by sufficiently maintaining the temperature of the molding device without heating the device. Such maintenance of temperature can be obtained by highly insulating the molding device at least at its entry end.

The ideal temperature range during molding to which the extrudate is heated or at which the extrudate is maintained differs according to the type of resin used, the type of foaming agent used, and the combination, thereof and can not be definitely specified. However, most desirably the resin temperature at the front end of the die (orifice) is continuously maintained during molding. When a polystyrene is used, the molding device is ordinarily maintained with a temperature range of (the softening point of the resin ± about 10°C, preferably ± about 5°C), although the range changes slightly in accordance with the type of foaming agent used. Figure 2 shows typical temperature changes with time of each portion in the section of an extrudate when the extrudate was obtained using an extruder and a molding device as shown in Fig. 1, without highly insulating or heating the molding device 2. Figure 3 is an example showing typical temperature changes with time of each portion in the section of an extrudate when the extrudate was obtained using the same extruder and the same molding device but the molding device 2 was heated to the same temperature as that of the resin temperature at the front end of the die (orifice) of the extruder. It is important to note that the section of the extrudate can be given a uniform temperature distribution by heating the molding device, and in the example of Fig. 3, the sectional temperature is substantially equal to the temperature of the innermost portion having the slowest cooling rate. The overall temperature of the section is decreased, even though the molding device is maintained at a constant temperature. This is presumed to be because the foaming agent contained in the foam causes foaming and the foam is deprived of heat by the evaporation of the foaming agent. In Fig. 3, the point at which the temperature decrease of each layer becomes substantially zero can be generally regarded to be the end point of foaming, and preferably, the heating or temperature maintenance of the molding device is continued to this point.

The process of the present invention is characterized in that the extruded foam produced has a lower density than that produced according to the conventional process, which is a great advantage of the present invention. It should be noted that the present process can further produce an extruded foam having a desired density. This is because, in the present process, the density of extruded foam can be set to a desired level by controlling the amount of foaming agent, the dimensional ratio of the extrusion die and the molding device, the take-off speed of the extrudate, etc. However, since the reduction in density of the foam decreases the mechanical strength thereof, the average density of a styrene resin foam is preferably at least 16 kg/m³.

As mentioned above, the extruded foam 3 which has passed through the molding device 2 has a uniform density in section, has a low density, and has been cooled to a temperature lower than or close to the softening point of the base resin, and molding thereof is complete. The extrudate 3 is then carried to a subsequent step by the roll conveyer.

Figure 4 shows the results of measurement of the average densities of a total of 36 divisions prepared in each of the extruded polystyrene resin foams produced according to the conventional process and the present process. Each extruded polystyrene resin foam had a sheet form having a section of 1000 mm (width) and 100 mm (thickness) and was divided into four layers in the thickness direction (the first, second, third, and fourth layers from the above) and into nine sections in the width direction (1 to 9 sections from the left when viewed from the extrusion side). In the extruded polystyrene foam according to the conventional process, it is clear that the surface layers, namely, the first and fourth layers, have high densities and the intermediate layers, namely, the second and third layers have low densities, and within each layer, the two outermost portions which come into contact with air have higher densities because these portions are cooled faster. It is further seen that the density distribution in the section of the extruded foam is nonuniform. In contrast, the extruded foam produced according to the present process has a uniform density distribution in the section perpendicular to the extrusion direction, and compared with the extruded foam produced according to the conventional process, a lower density.

Figure 5 shows an apparatus for carrying out another embodiment of the present invention. In Fig. 5, numerals 1 to 5 refer to the same elements as numerals 1 to 5 of Fig. 1, respectively; 6 is a temperature sensor; 7 a tunnel; 8 a blower; and 9 a heat exchanger. In this embodiment, an extrudate is passed through a molding device 2 which is heated or the temperature of which is maintained to obtain an extruded foam 3, and the extruded foam 3 is then passed through an atmosphere which is heated or the temperature of which is maintained. A gas heated by a heat exchanger 9 is circulated through a tunnel 7 by a blower 8 to form an atmosphere which is heated or the temperature of which is maintained. The extruded foam, which has passed through the molding device which is heated or the temperature of which is maintained, has substantially completed the foaming and molding process; however, when the extruded foam still has room for further foaming, it is passed through an atmosphere which is heated or the temperature of which is maintained, to allow the foam to complete foaming and to obtain an extruded foam which is uniform and has a low density. When foaming is completed during the passage through the molding device, heating by an atmosphere is theoretically unnecessary. When the molding device which is heated or the temperature of which is maintained is made longer than necessary, the effect does not increase in proportion to the energy consumed. In such a case, heating by an atmosphere is effective.

Figure 6 explains an embodiment of the present invention wherein an extruded foam which has passed through a molding device is heated by irradiation with infrared rays for the same purpose as mentioned in Fig. 5. In Fig. 6, 10 is an IR irradiator and numerals 1 to 7 refer to the same elements as numerals 1 to 7 of Fig. 5, respectively.

### Example 1

In an extrusion apparatus as shown in Fig. 1, a polystyrene and talc (a nucleating agent) were charged into an extruder. Further, 5 parts by weight of each of dichlorodifluoromethane and methyl chloride were added as a foaming agent, and were melted, mixed, and extruded at a temperature of about 115°C through a slit die (4.5 mm in thickness and 300 mm in width). The extrudate was immediately passed through a molding device heated to and controlled at 100°C, for a 30 second contact with the molding device, to obtain a foam having a thickness of 110 mm, a width of 960 mm, and an average density of 26.9 kg/m³. This foam was divided into four divisions in the thickness direction and into five divisions in the width direction. The resulting total of 20 blocks were measured for density. As a result, the largest density was 27.1 kg/m³ and the smallest density was 26.8 kg/m³, i.e., a maximum difference of 0.3 kg/m³, and the density distribution of the foam was uniform. The temperature distribution of the foam's cross-section was measured against time from the foam's exiting the die. At each cross-section, the temperature range was well under 5°C (and thereby according with Figure 3).

### Example 2

Using an extrusion apparatus as shown in Fig. 5, extrusion was conducted through a slit die in the same manner as in Example 1. The extrudate was immediately passed through a molding device heated to and controlled at 100°C, for a 30 seconds contact with the molding device. Subsequently, the extrudate was sent into an air circulation type tunnel heated to and controlled at 100°C, and was kept in an atmosphere of 100°C for 3 minutes to obtain a foam 115 mm in thickness 960 mm in width, and 24 kg/m³ in average density. This foam was divided in the same manner as in Example 1 and the density of each division was measured. As a result, the largest density was 24.1 kg/m³ and the smallest density was 223.9 kg/m³, i.e., a maximum difference of 0.2 kg/m³, and the density distribution was uniform. The temperature distribution of the foam's cross-section was measured over the period up to 210 seconds from the foam exiting the die. Again, the temperature range at each cross-section was well under 5°C, essentially in accordance with Figure 3.

### Example 3

The procedure of Example 2 was repeated except that the amount of the foaming agent was increased to 16 parts by weight, whereby a foam of 120 mm in thickness, 1000 mm in width, and 19.8 kg/m³ in average density was obtained. This foam was divided in the same manner as in Example 2, and the density of each division was measured. As a result, the largest density was 20.1 kg/m³ and the smallest density was 19.6 kg/m³, i.e., a maximum difference of 0.4 kg/m³, and the density distribution was uniform. The temperature distribution of the foam's cross-section was measured over the period up to 210 seconds from the foam exiting the die. Again, the temperature range at each cross-section was well under 5°C.

### Comparative Example 1

Extrusion was conducted through a slit die in the same manner as in Example 1. The resulting extrudate was passed through a molding device which was not heated and the temperature of which was not controlled, for a 30 seconds contact with the molding device, to obtain a foam. This foam had a thickness of 110 mm, a width of 980 mm, and an average density of 28.8 kg/m³. The foam was divided in the same manner as in Example 1 and the density of each division was measured. As a result, the largest density was 30.8 kg/m³ and the smallest density was 27.6 kg/m³, i.e., a distribution (difference) of 3.2 kg/m³, and the density distribution was nonuniform. The temperature distributions across the foam were high, essentially in agreement with Figure 2.

### Comparative Example 2

The procedure of Example 2 was repeated except that steam was used instead of heated air. The foam obtained dimensionally shrunk after being taken out of the steam atmosphere. The foam has a density of 32 kg/m³ and, upon division, contained water. After the division, the largest density was 35 kg/m³ and the smallest density was 28 kg/m³, i.e., a difference of 7 kg/m³, and the density distribution was nonuniform. Temperature measurements across the cross-section of the foam, measured at periods of up to 180 seconds after the foam exited the die, were made. The temperature range at any cross-section was less than 5°C.

## Claims

1. A process for producing an extruded polystyrene resin foam (3) by extruding a melt of a mixture of a polystyrene resin, and a foaming agent from a high pressure zone to a low pressure zone, characterized in that the material is extruded directly into a molding device (2) which is maintained at at a temperature within the range ± 10°C of the softening temperature of the resin in order to decrease the temperature differential between the interior and the exterior of the foam (3).

2. A process as claimed in Claim 1, wherein the extruded material (3) is passed through an atmosphere of air at at a temperature within the range ± 10°C of the softening temperature of the resin after its passage through the molding device (2).

3. A process as claimed in Claim 1 or Claim 2, wherein the extruded material is irradiated with infrared rays after its passage through the molding device (2).

4. A process as claimed in any one of the preceding claims wherein the molding device (2) is heated.

5. A device as claimed in any one of the preceding claims wherein the molding device (2) is provided with a heat-insulating covering.

6. A process as claimed in any one of the preceding claims, wherin the temperature range within a cross-section of the foam (3) is less than 5°C.

7. Apparatus for producing an extruded polystyrene foam, comprising an extruder (1) having a molding device (2) associated with the extrusion nozzle (1) with which the polystyrene is extruded, characterised in that means are provided for maintaining the molding device (2) at at a temperature within the range ± 10°C of the softening temperature of the resin during the extrusion process.

8. Apparatus as claimed in Claim 7, wherein the means for maintaining the molding device (2) at at a temperature within the range ± 10°C of the softening temperature of the resin comprises a heat insulating covering and/or a heating device (5).

## Patentansprüche

1. Verfahren zur Herstellung von extrudiertem Polystyrolschaumstoff (3) durch Extrudieren einer Schmelze einer Mischung aus einem Polystyrolharz, und einem Schäumungsmittel aus einer Zone hohen Drucks in eine Zone geringen Drucks, dadurch gekennzeichnet, daß das Material direkt in eine formgebende Vorrichtung (2) extrudiert wird, die bei einer Temperatur innerhalb des Bereichs von ± 10°C der Erweichungstemperatur des Harzes gehalten wird, um den Temperaturunterschied zwischen dem Inneren und dem Äußeren des Schaums (3) zu verringern.

2. Verfahren nach Anspruch 1, worin das extrudierte Material durch eine Atmosphäre aus Luft bei einer Temperatur innerhalb des Bereichs von ± 10°C der Erweichungstemperatur des Harzes geführt wird, nach seiner Durchführung durch die formgebende Vorrichtung.

3. Verfahren nach Anspruch 1 oder 2, worin das extrudierte Material mit Infrarotstrahlen, nach seiner Durchführung durch die formgebende Vorrichtung, bestrahlt wird.

4. Verfahren nach einem der vorhergehenden Ansprüche, worin die formgebende Vorrichtung (2) geheizt wird.

5. Vorrichtung nach einem der vorhergehenden Ansprüche, worin die formgebende Vorrichtung (2) mit einem wärmeisolierenden Überzug ausgestattet ist.

6. Verfahren nach einem der vorhergehenden Ansprüche, worin der Temperaturbereich innerhalb eines Querschnittes des Schaums (3) weniger als 5°C ist.

7. Vorrichtung zur Herstellung von extrudiertem Polystyrolschaum, umfassend, einen Extruder (1) mit einer formgebenden Vorrichtung (2), die mit einer Extrusionsdüse (1) mit der das Polystyrol extrudiert wird, assoziiert ist, dadurch gekennzeichnet, daß Mittel zur Verfügung gestellt werden, mit denen die formgebende Vorrichtung (2) bei einer Temperatur innerhalb des Bereichs von ± 10°C der Erweichungstemperatur des Harzes während des Extrusionsvorganges gehalten wird.

8. Vorrichtung nach Anspruch 7, worin die Mittel, mit denen die formgebende Vorrichtung (2) bei einer Temperatur innerhalb des Bereichs von ± 10°C der Erweichungstemperatur des Harzes gehalten wird, einen wärmeisolierenden Überzug und/oder eine Heizvorrichtung (5) umfassen.

## Revendications

1. Procédé de production d'une mousse extrudée de résine de polystyrène (3) en extrudant un bain fondu d'un mélange de résine de polystyrène et d'un agent moussant à partir d'une zone à haute pression vers une zone à basse pression, caractérisé en ce que la matière est extrudée directement dans un dispositif de moulage (2) qui est maintenu à une température située à l'intérieur d'une plage de ± 10°C par rapport à la température de ramollissement de la résine, afin de diminuer le différentiel de température entre l'intérieur et l'extérieur de la mousse (3).

2. Procédé selon la revendication 1, dans lequel la matière extrudée (3) est envoyée vers une atmosphère d'air à une température située à l'intérieur d'une plage de ± 10°C par rapport à la température de ramollissement de la résine après son passage à travers le dispositif de moulage (2).

3. Procédé selon la revendication 1 ou la revendication 2, dans lequel la matière extrudée est soumise à un rayonnement infrarouge après son passage à travers le dispositif de moulage (2).

4. Procédé selon l'une quelconque des revendications précédentes dans lequel le dispositif de moulage (2) est chauffé.

5. Dispositif selon l'une quelconque des revendications précédentes dans lequel le dispositif de moulage (2) est pourvu d'un revêtement thermiquement isolant.

6. Procédé selon l'une quelconque des revendications précédentes, dans lequel la plage de température à l'intérieur d'une section transversale de la mousse de (3) est inférieure à 5°C.

7. Appareil de production d'une mousse extrudée de polystyrène comprenant une extrudeuse (1), un dispositif de moulage (2) associé à la buse d'extrusion (1) par laquelle le polystyrène est extrudé, caractérisé en ce que des moyens sont prévus pour maintenir pendant le procédé d'extrusion le dispositif de moulage (2) à une température située à l'intérieur d'une plage de ± 10° C par rapport à la température de ramollissement de la résine.

8. Appareil selon la revendication 7, dans lequel le moyen de maintien de dispositif de moulage (7) à une température comprise dans la plage de ± 10°C par rapport à la température de ramollissement de la résine comprend un revêtement thermiquement isolant et/ou un élément chauffant (5).
